# EUROPEAN PATENT APPLICATION

(11) **EP 4 583 053 A1**
(43) Date of publication of application: **09.07.2025**
(21) Application number: 22957442.1
(22) Date of filing: 01.09.2022
(51) Int. Cl.: G06T 7/90

(54) **DETECTION DEVICE, DETECTION METHOD, AND DETECTION PROGRAM**

(71) Applicant: FUJITSU LIMITED, Kawasaki-shi, Kanagawa 211-8588 (JP)
(72) Inventor: MATSUNAMI, Tomoaki, Kawasaki-shi, Kanagawa 211-8588 (JP)
(74) Representative: Hoffmann Eitle
(86) International application number: PCT/JP2022/032990
(87) International publication number: WO 2024/047847

(57) **Abstract**

A detection device includes a color channel selection unit that selects a color channel, based on a separation degree that is an index calculated from each of a first color channel image and a second color channel image for an original image that includes a background image and a hand image and used to determine separability between the background image and the hand image and a hand image detection unit that detects the hand image included in the original image, by using the color channel selected by the color channel selection unit.

## Description

### FIELD

This case relates to a detection device, a detection method, and a detection program.

### BACKGROUND

For palm vein authentication, palm print authentication, or the like, it has been required to accurately detect a hand image from an original image (for example, refer to Patent Document 1). Furthermore, a technique has been known for detecting a hand image from an image binarized by using brightness for an original image captured by performing irradiation with visible light (for example, refer to Patent Document 2).

### SUMMARY

### TECHNICAL PROBLEM

However, it is difficult to accurately detect a palm region.

In one aspect, an object of the present invention is to provide a detection device, a detection method, and a detection program that can improve detection accuracy of a hand image.

### SOLUTION TO PROBLEM

In one aspect, a detection device includes a color channel selection unit that selects a color channel, based on a separation degree that is an index calculated from each of a first color channel image and a second color channel image for an original image that includes a background image and a hand image and used to determine separability between the background image and the hand image and a hand image detection unit that detects the hand image included in the original image, using the color channel selected by the color channel selection unit.

### ADVANTAGEOUS EFFECTS OF INVENTION

It is possible to improve detection accuracy of a hand image.

### BRIEF DESCRIPTION OF DRAWINGS

FIG. 1A is a block diagram illustrating an overall configuration of a detection device, and FIG. 1B is a block diagram illustrating a hardware configuration of the detection device.
FIG. 2 is a flowchart illustrating an example of hand image detection processing executed by the detection device.
FIG. 3A is a diagram illustrating a key point, and FIG. 3B is a diagram illustrating a small region.
FIG. 4 is a diagram illustrating a flowchart illustrating details of step S6 in FIG. 2.
FIG. 5 is a diagram illustrating details of step S5 to step S7 in FIG. 2.
FIG. 6 is a diagram illustrating a case where a separation degree is large.
FIG. 7 is a diagram illustrating a case where the separation degree is large.
FIG. 8 is a diagram illustrating a case where the separation degree is small.
FIG. 9 is a diagram illustrating a case where the separation degree is small.
FIG. 10 is a flowchart illustrating an example of registration processing.
FIG. 11 is a flowchart illustrating an example of collation processing.

### DESCRIPTION OF EMBODIMENTS

Biometric authentication is a technology for performing identity verification using biometric information such as fingerprints, faces, or veins. In the biometric authentication, biometric data for collation obtained by a sensor is compared (collated) with registered biometric data registered in advance in a situation where confirmation is needed, and it is determined whether or not a degree of similarity is equal to or higher than an identity determination threshold, thereby verifying the identity.

In palm vein authentication, palm print authentication, or the like, it is important to accurately detect a hand image from an original image. However, for example, in a case where imaging is performed using a typical camera such as a camera built in a mobile terminal, there is a possibility that it is difficult to separate the hand image from a background image depending on optical characteristics of the camera, an influence of reflection or shadow due to an influence of a light source, a color, a pattern, or the like of background.

Therefore, in the following embodiments, a detection device, a detection method, and a detection program that can improve detection accuracy of a hand image by separating the hand image and the background image regardless of an imaging condition will be described.

### [First Embodiment]

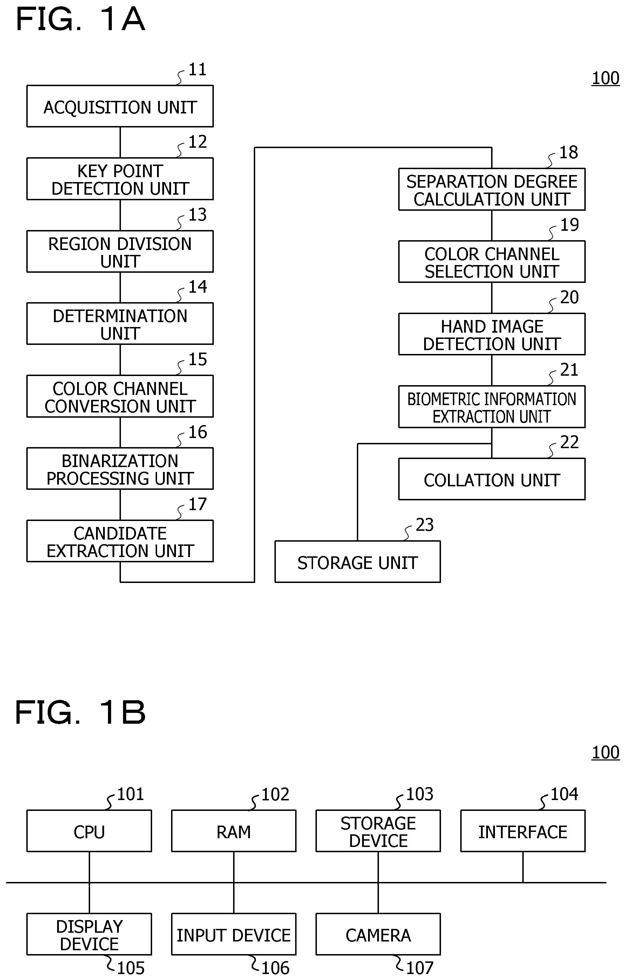

FIG. 1A is a block diagram illustrating an overall configuration of a detection device 100. As illustrated in FIG. 1A, the detection device 100 functions as an acquisition unit 11, a key point detection unit 12, a region division unit 13, a determination unit 14, a color channel conversion unit 15, a binarization processing unit 16, a candidate extraction unit 17, a separation degree calculation unit 18, a color channel selection unit 19, a hand image detection unit 20, a biometric information extraction unit 21, a collation unit 22, a storage unit 23, and the like.

FIG. 1B is a block diagram illustrating a hardware configuration of the detection device 100. As illustrated in FIG. 1B, the detection device 100 includes a CPU 101, a RAM 102, a storage device 103, an interface 104, a display device 105, an input device 106, a camera 107, and the like.

The Central Processing Unit (CPU) 101 is a central processing unit. The CPU 101 includes one or more cores. The Random Access Memory (RAM) 102 is a volatile memory that temporarily stores a program to be executed by the CPU 101, data to be processed by the CPU 101, and the like. The storage device 103 is a non-volatile storage device. As the storage device 103, for example, a Read Only Memory (ROM), a Solid State Drive (SSD: Solid State Drive) such as a flash memory, a hard disk to be driven by a hard disk drive, or the like may be used. The storage device 103 stores a detection program. The interface 104 is an interface device with an external device. For example, the interface 104 is an interface device with a Local Area Network (LAN).

The display device 105 is a display device or the like such as a Liquid Crystal Device (LCD). The input device 106 is an input device such as a keyboard or a mouse. The camera 107 is a Metal Oxide Semiconductor (MOS) sensor, a Charged Coupled Device (CCD) sensor, or the like.

The CPU 101 executes the detection program so as to implement the acquisition unit 11, the key point detection unit 12, the region division unit 13, the determination unit 14, the color channel conversion unit 15, the binarization processing unit 16, the candidate extraction unit 17, the separation degree calculation unit 18, the color channel selection unit 19, the hand image detection unit 20, the biometric information extraction unit 21, the collation unit 22, and the storage unit 23. Note that, as the acquisition unit 11, the key point detection unit 12, the region division unit 13, the determination unit 14, the color channel conversion unit 15, the binarization processing unit 16, the candidate extraction unit 17, the separation degree calculation unit 18, the color channel selection unit 19, the hand image detection unit 20, the biometric information extraction unit 21, the collation unit 22, and the storage unit 23, hardware such as a dedicated circuit may be used.

### (Hand Image Detection Processing)

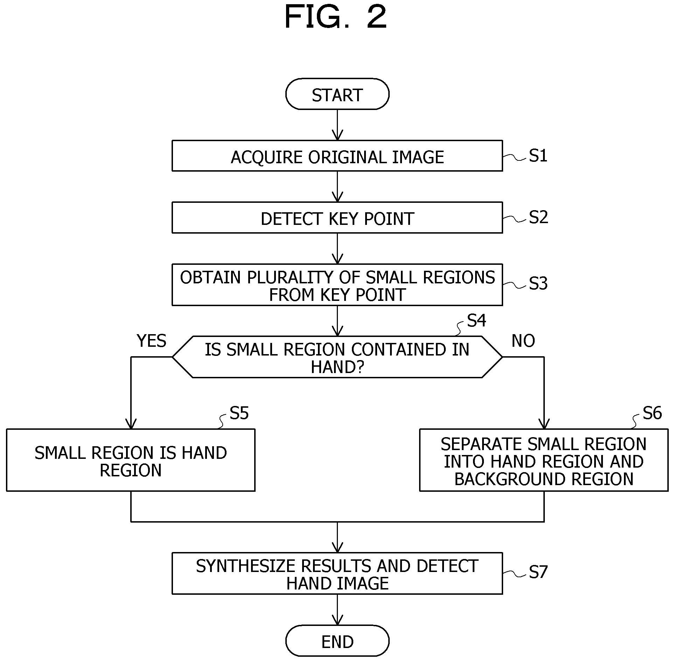

FIG. 2 is a flowchart illustrating an example of hand image detection processing executed by the detection device 100. An example of an operation of the detection device 100 will be described with reference to FIG. 2.

The acquisition unit 11 acquires an original image including a hand image and a background image, from the camera 107 (step S1).

Next, the key point detection unit 12 detects a plurality of key points indicating parts of a hand, in the original image acquired by the acquisition unit 11 (step S2). For example, the key point detection unit 12 detects 21 key points P₀ to P₂₀. The key point P₀ is a point at a boundary between a palm and a wrist. The key point P₁ is a point at a base of a thumb. The key point P₂ is a point at a second joint of the thumb. The key point P₃ is a point at a first joint of the thumb. The key point P₄ is a point at a fingertip of the thumb. The key point P₅ is a point at a base of an index finger. The key point P₆ is a point at a second joint of the index finger. The key point P₇ is a point at a first joint of the index finger. The key point P₈ is a point at a fingertip of the index finger. The key point P₉ is a point at a base of a middle finger. The key point P₁₀ is a point at a second joint of the middle finger. The key point P₁₁ is a point at a first joint of the middle finger. The key point P₁₂ is a point at a fingertip of the middle finger. The key point P₁₃ is a point at a base of a ring finger. The key point P₁₄ is a point at a second joint of the ring finger. The key point P₁₅ is a point at a first joint of the ring finger. The key point P₁₆ is a point at a fingertip of the ring finger. The key point P₁₇ is a point at a base of a little finger. The key point P₁₈ is a point at a second joint of the little finger. The key point P₁₉ is a point at a first joint of the little finger. The key point P₂₀ is a point at a fingertip of the little finger.

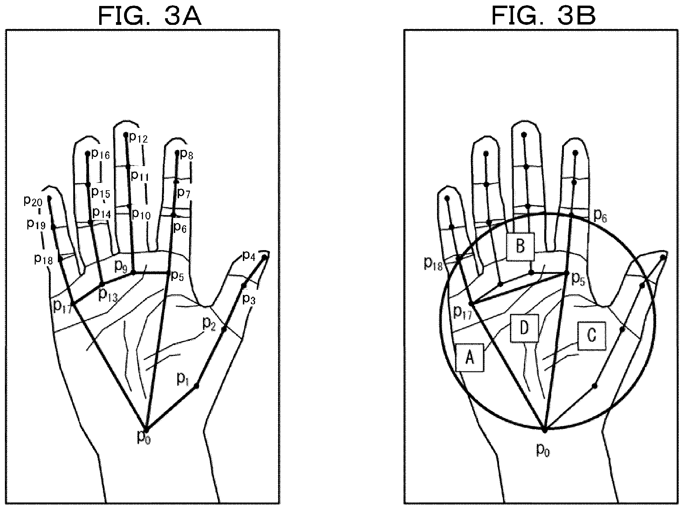

These key points P₀ to P₂₀ can be detected, for example, from an RGB image. For example, the key points P₀ to P₂₀ can be obtained by detecting a Bounding box indicating a region of a hand and then detecting each portion of the hand. For example, the key points P₀ to P₂₀ can be detected by using a method in Non-Patent Document 1 "T. Simon, H. Joo, I. Matthews, and Y. Sheikh, "Hand keypoint detection in single images using multiview bootstrapping," in CVPR, 2017.". The key points P₀ to P₂₀ are illustrated in FIG. 3A.

Next, the region division unit 13 obtains a plurality of small regions A to D from the original image, using the key points (step S3). The small region is a region smaller than the original image. FIG. 3B is a diagram illustrating the small regions A to D. A black circle drawn by a black line is a circle passing through the key points P₀, P₆, and P₁₈. The region D is a triangle having the key points P₀, P₅, and P₁₇ as vertices. The small region B is a region obtained with the black circle, a straight line connecting the key points P₆ and P₅, a straight line connecting the key points P₅ and P₁₃, and a straight line connecting the key points P₁₃ and P₁₄. The small region A is a region on a left side of the small regions B and D, in the black circle. The small region C is a region on a right side of the small regions B and D, in the black circle.

Next, the determination unit 14 determines whether or not each small region is contained in the hand, in a case of planar view (step S4). Since the entire region of the small region D is contained in the hand, it is determined as "Yes". Since the small regions A to C include background, it is determined as "No".

In a case where it is determined in step S4 as "Yes", the determination unit 14 determines that the small region determined as "Yes" in step S4 is the region of the hand (step S5).

In a case where it is determined in step S4 as "No", the color channel conversion unit 15, the binarization processing unit 16, the candidate extraction unit 17, the separation degree calculation unit 18, and the color channel selection unit 19 separate the small region determined as "No" in step S4 into the region of the hand and the background region (step S6). Details will be described later.

Next, the hand image detection unit 20 synthesizes the hand regions in the respective small regions obtained in steps S5 and S6, the hand image detection unit 20 detects the hand image (step S7).

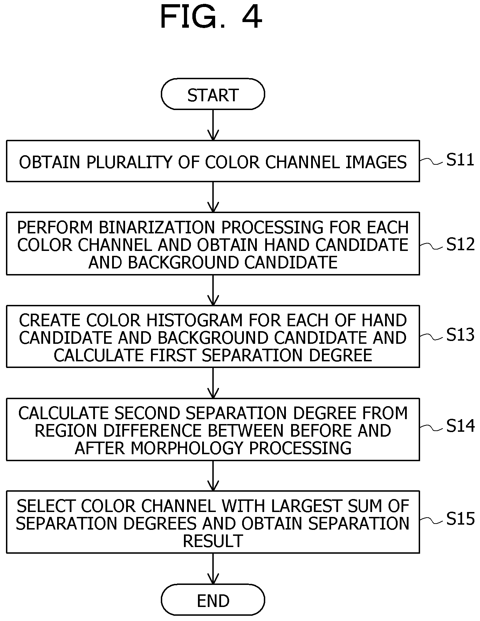

FIG. 4 is a diagram illustrating a flowchart illustrating details in step S6. Processing in FIG. 4 is executed on each small region determined as "No" in step S4. In the present embodiment, the processing in FIG. 4 is executed on each of the small regions A to C.

First, the color channel conversion unit 15 converts the small region to be a target into a plurality of color channel images (step S11). The plurality of color channel images includes a first color channel image and a second color channel image that are at least two types of color channels. The color channel includes, for example, red (R), green (G), blue (B), hue (H: Hue), saturation (S: Saturation), brightness (V: value and brightness), a brightness (Y), a color difference (U), a color difference (V), or the like. For example, the color channel conversion unit 15 obtains an image of each color channel (hereinafter, referred to as color channel image), for the small region to be the target. Note that the plurality of color channel images may include a color channel image that includes three or more color channels.

Next, the binarization processing unit 16 executes binarization processing using a predetermined threshold, on each color channel image and obtains a hand candidate and a background candidate (step S12). For example, the hand candidate is represented in white, and the background candidate is represented in black.

Next, the separation degree calculation unit 18 creates each of a color histogram (frequency distribution of pixel value) of the hand candidate and a color histogram of the background candidate, for each color channel image before the binarization processing and calculates a first separation degree (step S13). For example, the binarization processing is executed on an R image, and the hand candidate and the background candidate are obtained. Next, each of a color histogram of the hand candidate and a color histogram of the background candidate is created, for the R image before the binarization processing. From superposition of these histograms, a first separation degree of the R image is calculated.

Next, the separation degree calculation unit 18 executes morphology processing on at least one of the hand candidate and the background candidate, for each color channel image after the binarization processing. The morphology processing is filling a region. The separation degree calculation unit 18 calculates a second separation degree from a region difference between before and after the morphology processing (step S14).

Next, the color channel selection unit 19 selects a color channel that maximizes a sum of the first separation degree and the second separation degree and obtains a result of separation from the palm to the background (step S15). For example, by normalizing the first separation degree and the second separation degree, it is possible to quantify the first separation degree and the second separation degree on the same scale. For example, by expressing the first separation degree and the second separation degree as numerical values from zero to 100, the sum of the first separation degree and the second separation degree can be compared at the same standard for each color channel.

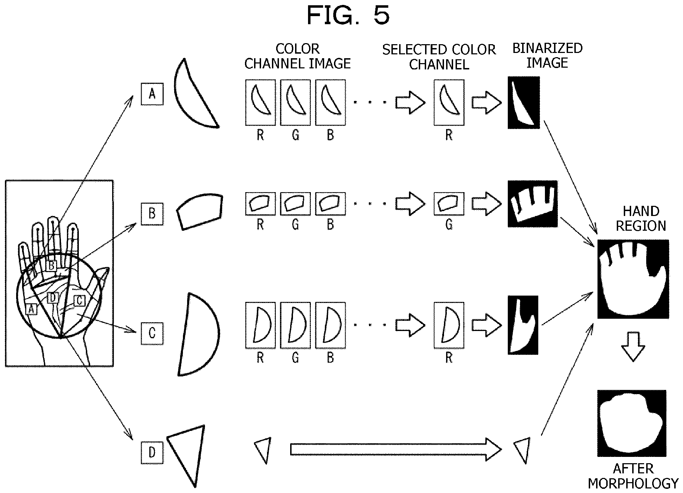

FIG. 5 is a diagram illustrating details of steps S5 to S7 in FIG. 2. As illustrated in FIG. 5, for each of the small regions A to C, a plurality of color channel images is obtained. For each of the small regions A to C, a color channel image that maximizes the sum of the first separation degree and the second separation degree is selected. In the example in FIG. 5, an R image is selected in the small region A, a G image is selected in the small region B, and an R image is selected in the small region C. Thereafter, a palm region is synthesized from an image after the binarization processing of the selected color channel image. For the small region D, the color channel is not selected, and the binarization processing is executed. The synthesized palm region is shaped by the morphology processing. By extracting a region corresponding to the region shaped by the morphology processing from the original image, it is possible to improve detection accuracy of the hand image. Note that, for example, the hand image is an image indicating the palm region.

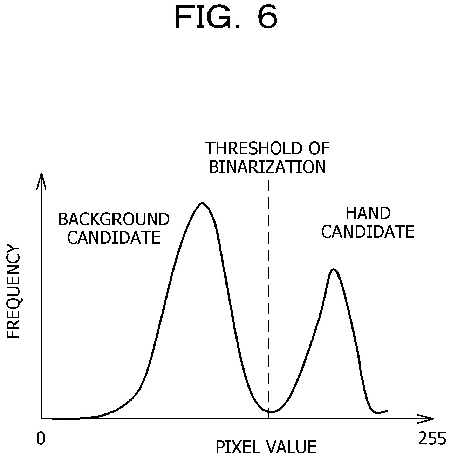

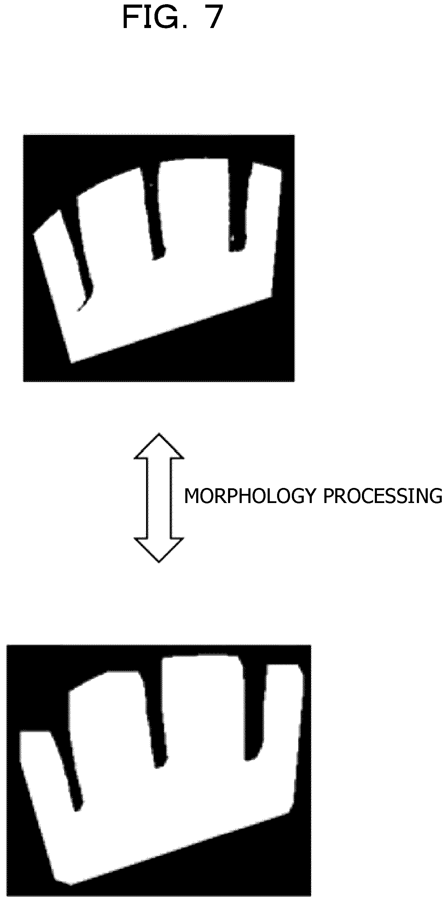

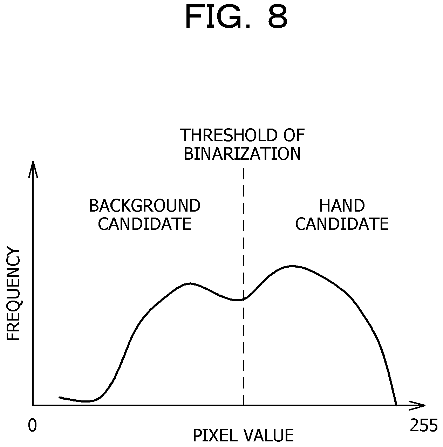

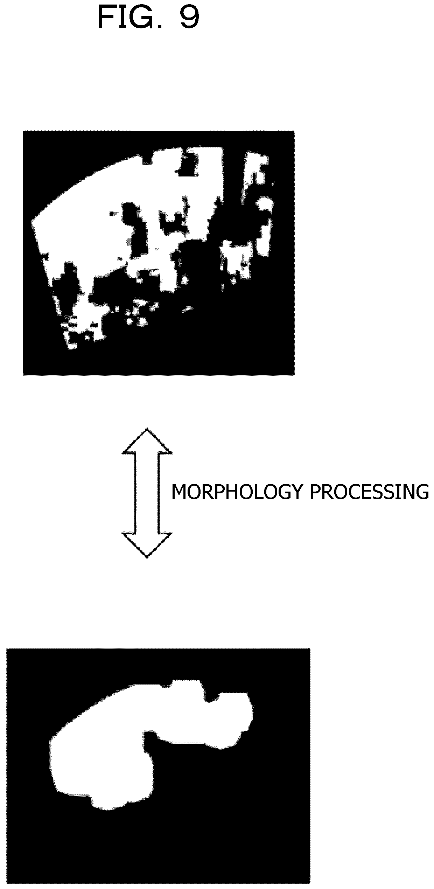

FIGs. 6 to 9 are diagrams illustrating details of the calculation of the first separation degree and the second separation degree. FIGs. 6 and 7 are diagrams illustrating a case where the separation degree is large. FIGs. 8 and 9 are diagrams illustrating a case where the separation degree is small.

FIG. 6 is a diagram illustrating a color histogram in a case where the first separation degree is large. In FIG. 6, the color histogram of the hand candidate in the color channel image and the color histogram of the background candidate in the color channel image are superimposed. When the first separation degree is large, as illustrated in FIG. 6, separability between the background candidate and the hand region is enhanced across a threshold of binarization. For example, the first separation degree can be defined as a size of an interval between a pixel value of a peak position of the color histogram of the background candidate and a pixel value of a peak position of the color histogram of the hand candidate. The first separation degree increases as the interval increases and decreases as the interval decreases. Alternatively, the first separation degree may be a low frequency at the bottom between the two peaks or the like. Alternatively, the first separation degree may be a value reflecting both of the above interval and the above low frequency.

FIG. 7 is a diagram illustrating details in a case where the second separation degree is large. An upper diagram in FIG. 7 is a binarized image. A lower diagram in FIG. 7 is an image obtained by executing the morphology processing on the binarized image. When the second separation degree is large, as illustrated in FIG. 7, a region difference between before and after the morphology processing is reduced.

FIG. 8 is a diagram illustrating a color histogram in a case where the first separation degree is small. In FIG. 8, the color histogram of the hand candidate in the color channel image and the color histogram of the background candidate in the color channel image are superimposed. When the first separation degree is small, as illustrated in FIG. 8, in the color histogram, separability between the background region and the palm region is lowered across the threshold of the binarization.

FIG. 9 is a diagram illustrating details in a case where the second separation degree is small. An upper diagram in FIG. 9 is a binarized image. A lower diagram in FIG. 9 is an image obtained by executing the morphology processing on the binarized image. When the second separation degree is small, as illustrated in FIG. 9, the region difference between before and after the morphology processing increases.

Hereinafter, biometric authentication processing using the detected palm region will be described.

### (Registration Processing)

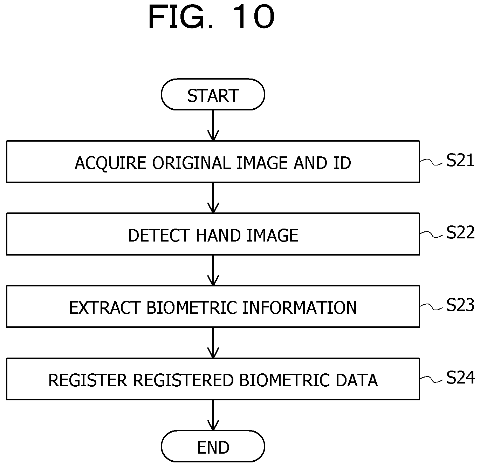

FIG. 10 is a flowchart illustrating an example of registration processing executed by the detection device 100.

As illustrated in FIG. 10, the acquisition unit 11 acquires an original image captured by the camera 107 and an identification information (ID) of the registrant (step S21). The ID is input by the registrant or the like using the input device 106, for example.

Next, the hand image detection unit 20 detects a hand image by the hand image detection processing described above (step S22).

Next, the biometric information extraction unit 21 extracts biometric information from the hand image detected in step S22 (step S23). The biometric information is a vein, a palm print, or the like. However, the biometric information is not particularly limited as long as the biometric information is obtained from the hand image.

The storage unit 23 stores the biometric information extracted in step S23 as the registered biometric data, in association with the ID acquired in step S21 (step S24). Through the above processing, the registration processing is completed. For example, by repeating a plurality of times of this registration processing, it is possible to register the biometric information of the plurality of registrants.

### (Collation Processing)

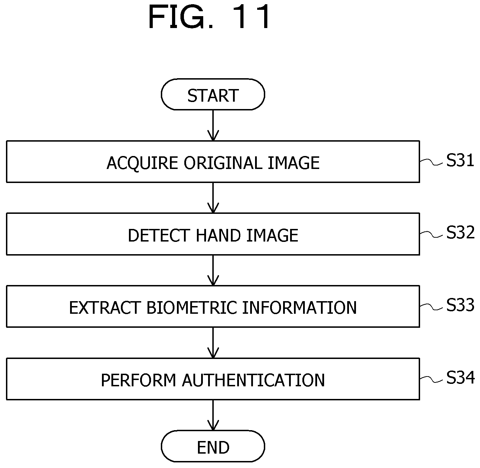

FIG. 11 is a flowchart illustrating an example of collation processing executed by the detection device 100.

As illustrated in FIG. 11, the acquisition unit 11 acquires an original image captured by the camera 107 (step S31).

Next, the hand image detection unit 20 detects a hand image by the hand image detection processing described above (step S32).

Next, the biometric information extraction unit 21 extracts the biometric information from the hand image detected in step S32, as biometric data for collation (step S33).

The collation unit 22 performs authentication, by collating the biometric data for collation extracted in step S33 and each registered biometric data stored in the storage unit 23 (step S34). Specifically, it is determined whether or not a degree of similarity between each registered biometric data stored in the storage unit 23 and the biometric data for collation extracted in step S33 is equal to or more than a threshold. Then, if there is the registered biometric data of which the degree of similarity is equal to or more than the threshold, it is determined that the biometric data for collation is biometric information of a person having the ID of the registered biometric data. The collation unit 22 outputs a determination result.

According to the present embodiment, the separation degree is calculated that is an index used to determine the separability between the background image and the hand image, from each of the first color channel image and the second color channel image for the original image including the background image and the hand image. The color channel is selected based on the calculated separation degree. The hand image included in the original image is detected, using the selected color channel. In order to detect the hand image using the color channel with a high separation degree, the hand image and the background image can be accurately separated regardless of an imaging condition. Therefore, the detection accuracy of the hand image is improved.

Note that the separation degree is not particularly limited as long as the separation degree is the index used to determine the separability between the background image and the hand image.

However, by using the first separation degree calculated from the color histogram calculated for each of the background candidate and the hand candidate, the detection accuracy of the separability between the background candidate and the hand candidate is enhanced. Furthermore, by using the second separation degree according to the region difference between before and after the morphology processing executed on at least one of the background candidate and the hand candidate, the detection accuracy of the separability between the background candidate and the hand candidate is enhanced.

Furthermore, by determining the separability between the background candidate and the hand candidate for each of the plurality of small regions obtained from the original image, it is possible to select the color channel for each small region. As a result, the detection accuracy of the hand image from the original image is further improved. By obtaining the small region using the key point regarding the part of the hand, it is possible to reduce an influence of an individual difference of the palm. Therefore, the influence of the individual difference such as a size or a shape difference of the palm can be reduced. A processing amount for detecting the hand image can be reduced, by not selecting the color channel for the small region determined to be positioned in the hand.

Note that, in each example described above, the color channel selection unit 19 is an example of a color channel selection unit that selects the color channel based on the separation degree that is the index calculated from each of the first color channel image and the second color channel image for the original image including the background image and the hand image and is used to determine the separability between the background image and the hand image. The hand image detection unit 20 is an example of a hand image detection unit that detects the hand image included in the original image, by using the color channel selected by the color channel selection unit. The binarization processing unit 16 is an example of a binarization processing unit that binarizes each of the first color channel image and the second color channel image. The candidate extraction unit 17 is an example of a candidate extraction unit that extracts the background candidate and the hand candidate from each of the first color channel image and the second color channel image that have been binarized. The separation degree calculation unit 18 is an example of a frequency distribution calculation unit that calculates the frequency distribution of the pixel value, for each of the background candidate and the hand candidate. Furthermore, the separation degree calculation unit 18 is an example of a morphology processing unit that executes morphology processing on at least one of the background candidate and the hand candidate. The region division unit 13 is an example of a region division unit that divides each of the first color channel image and the second color channel image into the plurality of regions. The determination unit 14 is an example of a determination unit that determines whether or not the plurality of regions includes the background, using the key point.

While the embodiments of the present invention have been described above in detail, the present invention is not limited to such specific embodiments, and various modifications and alterations may be made within the scope of the present invention described in the claims.

### CITATION LIST

### PATENT DOCUMENT

Patent Document 1: Japanese Laid-open Patent Publication No. 2018-026012
Patent Document 2: Japanese Patent No. 6629150

### NON-PATENT DOCUMENT

Non-Patent Document 1: T. Simon, H. Joo, I. Matthews, and Y. Sheikh, "Hand keypoint detection in single images using multiview bootstrapping," in CVPR, 2017.

### REFERENCE SIGNS LIST

- 11: acquisition unit
- 12: key point detection unit
- 13: region division unit
- 14: determination unit
- 15: color channel conversion unit
- 16: binarization processing unit
- 17: candidate extraction unit
- 18: separation degree calculation unit
- 19: color channel selection unit
- 20: hand image detection unit
- 21: biometric information extraction unit
- 22: collation unit
- 23: storage unit
- 100: detection device
- 105: display device
- 107: camera

## Claims

1. A detection device comprising:
a color channel selection unit configured to select a color channel, based on a separation degree that is an index calculated from each of a first color channel image and a second color channel image for an original image that includes a background image and a hand image and used to determine separability between the background image and the hand image; and
a hand image detection unit configured to detect the hand image included in the original image, by using the color channel selected by the color channel selection unit.

2. The detection device according to claim 1, further comprising:
a binarization processing unit configured to binarize each of the first color channel image and the second color channel image;
a candidate extraction unit configured to extract a background candidate and a hand candidate, from each of the first color channel image and the second color channel image that have been binarized; and
a frequency distribution calculation unit configured to calculate a frequency distribution of a pixel value, for each of the background candidate and the hand candidate, wherein
the separation degree includes a first separation degree calculated from the frequency distribution of the pixel value.

3. The detection device according to claim 2, wherein the first separation degree is a separation degree according to a pixel value difference between two frequency peaks, in the frequency distribution of the pixel value.

4. The detection device according to claim 1, further comprising:
a binarization processing unit configured to binarize each of the first color channel image and the second color channel image;
a candidate extraction unit configured to extract a background candidate and a hand candidate, from each of the first color channel image and second color channel image that have been binarized; and
a morphology processing unit configured to execute morphology processing on at least one of the background candidate and the hand candidate, wherein
the separation degree includes a second separation degree according to a region difference between before and after the morphology processing.

5. The detection device according to any one of claims 1 to 4, further comprising:
a region division unit configured to divide each of the first color channel image and the second color channel image into a plurality of regions, wherein
the color channel selection unit selects the color channel according to the separation degree of each of the plurality of regions.

6. The detection device according to claim 5, wherein the region division unit divides each of the first color channel image and the second color channel image into the plurality of regions, according to a key point for a part of a hand detected from the original image.

7. The detection device according to claim 6, further comprising:
a determination unit configured to determine whether or not the plurality of regions includes background, by using the key point, wherein
the color channel selection unit is configured not to performs the selecting of the color channel on a region determined not to include the background by the determination unit, and
the hand image detection unit is configured to detect, as the hand image, the region determined not to include the background.

8. A detection method implemented by a computer, the detection method comprising:
the computer selecting a color channel, based on a separation degree that is an index calculated from each of a first color channel image and a second color channel image for an original image that includes a background image and a hand image and used to determine separability between the background image and the hand image; and
the computer detecting the hand image included in the original image, by using the color channel selected.

9. The detection method according to claim 8, further comprising:
the computer binarizing each of the first color channel image and the second color channel image;
the computer extracting a background candidate and a hand candidate, from each of the first color channel image and the second color channel image that have been binarized; and
the computer calculating a frequency distribution of a pixel value, for each of the background candidate and the hand candidate, wherein
the separation degree includes a first separation degree calculated from the frequency distribution of the pixel value.

10. The detection method according to claim 9, wherein the first separation degree is a separation degree according to a pixel value difference between two frequency peaks, in the frequency distribution of the pixel value.

11. The detection method according to claim 8, further comprising:
the computer binarizing each of the first color channel image and the second color channel image;
the computer extracting a background candidate and a hand candidate, from each of the first color channel image and second color channel image that have been binarized; and
the computer executing morphology processing on at least one of the background candidate and the hand candidate, wherein
the separation degree includes a second separation degree according to a region difference between before and after the morphology processing.

12. The detection method according to any one of claims 8 to 11, further comprising:
the computer dividing each of the first color channel image and the second color channel image into a plurality of regions, wherein
the selecting of the color channel is performed for each region of the plurality of regions to select the color channel according to the separation degree of the each region.

13. The detection method according to claim 12, wherein the dividing includes dividing each of the first color channel image and the second color channel image into the plurality of regions, according to a key point for a part of a hand detected from the original image.

14. The detection method according to claim 13, further comprising:
the computer determining whether or not the plurality of regions includes background, by using the key point, wherein
the selecting of the color channel is not performed on a region determined not to include the background, and
the region determined not to include the background is detected as the hand image.

15. A detection program comprising instructions which, when executed by a computer, cause the computer to perform processing comprising:
the computer selecting a color channel, based on a separation degree that is an index calculated from each of a first color channel image and a second color channel image for an original image that includes a background image and a hand image and used to determine separability between the background image and the hand image; and
the computer detecting the hand image included in the original image, by using the color channel selected.

16. The detection program according to claim 15, the processing further comprising:
the computer binarizing each of the first color channel image and the second color channel image;
the computer extracting a background candidate and a hand candidate, from each of the first color channel image and the second color channel image that have been binarized; and
the computer calculating a frequency distribution of a pixel value, for each of the background candidate and the hand candidate, wherein
the separation degree includes a first separation degree calculated from the frequency distribution of the pixel value.

17. The detection program according to claim 16, wherein the first separation degree is a separation degree according to a pixel value difference between two frequency peaks, in the frequency distribution of the pixel value.

18. The detection program according to claim 15, the processing further comprising:
the computer binarizing each of the first color channel image and the second color channel image;
the computer extracting a background candidate and a hand candidate, from each of the first color channel image and second color channel image that have been binarized; and
the computer executing morphology processing on at least one of the background candidate and the hand candidate, wherein
the separation degree includes a second separation degree according to a region difference between before and after the morphology processing.

19. The detection program according to any one of claims 15 to 18, the processing further comprising:
the computer dividing each of the first color channel image and the second color channel image into a plurality of regions, wherein
the selecting of the color channel is performed for each region of the plurality of regions to select the color channel according to the separation degree of the each region.

20. The detection program according to claim 19, wherein the dividing includes dividing each of the first color channel image and the second color channel image into the plurality of regions, according to a key point for a part of a hand detected from the original image.

21. The detection program according to claim 20, the processing further comprising:
the computer determining whether or not the plurality of regions includes background, by using the key point, wherein
the selecting of the color channel is not performed on a region determined not to include the background, and
the region determined not to include the background is detected as the hand image.
